Europäisches Patentamt

European Patent Office

Office européen des brevets

(11) Veröffentlichungsnummer: **0 011 850**
**B1**

## (12) EUROPÄISCHE PATENTSCHRIFT

(45) Veröffentlichungstag der Patentschrift:
30.12.81

(51) Int. Cl.³: **G 03 B 27/30**, G 03 D 9/00

(21) Anmeldenummer: 79104707.9

(22) Anmeldetag: 27.11.79

(54) Vorrichtung zum Belichten und Entwickeln von lichtempfindlichem Material.

(30) Priorität: 30.11.78 DE 2851892

(43) Veröffentlichungstag der Anmeldung:
11.06.80 Patentblatt 80/12

(45) Bekanntmachung des Hinweises auf die Patenterteilung:
30.12.81 Patentblatt 81/52

(84) Benannte Vertragsstaaten:
BE CH FR GB IT NL SE

(56) Entgegenhaltungen:
CH-A-327 750
CH-A-378 159
DE-B-1 128 748
DE-B-1 233 260
DE-B-1 250 266
GB-A-1 182 305
US-A-3 308 717

(73) Patentinhaber: **AGFA-GEVAERT Aktiengesellschaft,
Camera-Werk Patent- und Lizenzwesen Postfach,
D-8000 München 90 (DE)**

(72) Erfinder: **Stemme, Otto, Dr., Heideckstrasse 29,
D-8000 München 19 (DE)**
Erfinder: **Fergg, Berthold, Dr., Enzianring 3,
D-8021 Taufkirchen (DE)**
Erfinder: **Osegowitsch, Viktor, Ahornring 47,
D-8021 Taufkirchen (DE)**
Erfinder: **Viehrig, Wolfgang, Sachranger Strasse 16,
D-8000 München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Vorrichtung zum Belichten und Entwickeln von lichtempfindlichem Material

Die Erfindung betrifft eine Vorrichtung zum Belichten und Entwickeln von lichtempfindlichem Material, mit einer eine Lichtquelle, Farbfilter, eine Vorlagenbühne und eine einstellbare Abbildungsoptik aufweisenden Belichtungseinrichtung, einer die Positivebene definierenden Aufnahme für das lichtempfindliche Material und einer Entwicklungsstation, in welche das lichtempfindliche Material von der Aufnahme überführbar ist.

Eine Vorrichtung der eingangs genannten Art ist beispielsweise aus der US-PS 3 308 717 bekannt. Zur Arbeitsvereinfachung und Zeitersparnis sind Vergrösserungs- und Entwicklungseinrichtung dabei in ein Gerät zusammengefasst. Damit hierbei ein exakter Materialtransport von der Belichtungsstation in die Entwicklungseinrichtung, vor allem aber durch die einzelnen Entwicklungsbäder erfolgen kann, ist ein grosser technischer Aufwand notwendig. Damit bleibt eine solche Vorrichtung aufgrund von Anschaffungskosten, aber auch wegen ihrer Baugrösse der Verwendung in kommerziellen Grosslabors vorbehalten. Für den Fotoamateur, der aufgrund von heute üblichen, begrenzten Wohnverhältnissen nach einem Kompaktgerät zum Vergrössern und Entwickeln sucht, sind solche bekannten Vorrichtungen ungeeignet.

Aufgabe der Erfindung ist es daher, eine Vorrichtung der eingangs genannten Art zu schaffen, die durch kleine Baugrösse und Einfachheit in der Bedienung als Heimlabor geeignet sein soll.

Diese Aufgabe wird durch die im Kennzeichen des Anspruchs 1 beschriebene Erfindung gelöst.

Durch die Anwendung des Diffusionsverfahrens für die Vergrösserung von farbigen Vorlagen und Erstellung von Colorbildern kann ein Gerät von sehr kleiner Bauweise erreicht werden. Zum einen kann die Entwicklungsstation sehr kurz gehalten sein, da nur ein Benetzungsbad erforderlich ist. Die Anordnung des Diffusionsraumes unterhalb der Positivebene bzw. der Materialaufnahme sowie die Umkehr der Bewegungsrichtung des lichtempfindlichen Materials erbringt lediglich eine geringfügige Erhöhung der gesamten Vorrichtung, eine Ausdehnung in Breite oder Tiefe ist dabei jedoch vermieden. Schliesslich ist die Transportgeschwindigkeit des Materials durch das Diffusionsbad wenig kritisch, so dass dieser Transport von Hand oder mit einem einfachen elektromotorischen Antrieb ausgeführt werden kann.

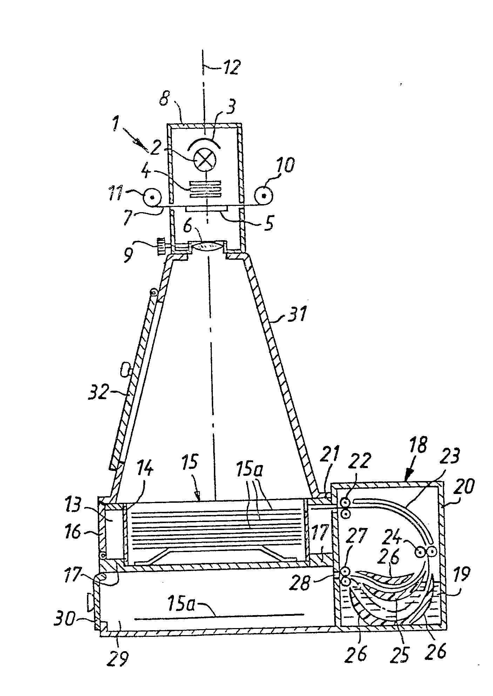

Weitere Einzelheiten und Vorteile der Erfindung ergeben sich aus den Unteransprüchen im Zusammenhang mit der Beschreibung eines Ausführungsbeispieles, das anhand einer Figur eingehend erläutert ist. Die einzige Figur zeigt eine schematische Ansicht der erfindungsgemässen Vorrichtung.

In der Figur ist mit 1 eine Belichtungseinrichtung mit einer Lichtquelle 2, einem Spiegel 3, einer Filteranordnung 4, einer Vorlagenbühne 5 und einer variablen Optik 6 bezeichnet. Die Elemente 2 bis 6 der Belichtungseinrichtung 1 sind in einem Gehäuse 8 angeordnet, an dessen Aussenseite sich ein Drehknopf 9 befindet, durch den die Scharfeinstellung durch Verändern der Optik 6 vorgenommen werden kann. In der Vorlagenbühne 5 liegt eine bandförmige Vorlage 7, welche durch geeignete Mittel von einer Abwickelspule 10 zu einer Aufwickelspule 11 transportiert werden kann. Selbstverständlich kann in der Belichtungseinrichtung 1 auch eine Handhabung einzelner Vorlagen vorgesehen werden.

Auf der optischen Achse 12 der Abbildungsoptik 6 ist eine Aufnahme 13 vorgesehen, in welche eine Kassette 14 mit lichtempfindlichem Material 15 eingesetzt ist. Die Aufnahme 13 weist an einer Seite eine Klappe 16 auf, welche zum Zwecke des Kassettenwechsels geöffnet werden kann. Innerhalb der Aufnahme 13 sind Anschläge bzw. Führungen 17 vorgesehen, durch welche die Kassette positioniert werden kann. Das lichtempfindliche Material 15 in der Kassette 14 besteht aus einem Pak von mehreren Zwei-Blatt-Einheiten 15a, wobei von der obersten Einheit ein Führungsende über den Kassettenrand hinausragt und bei Entnahme der obersten Einheit automatisch das Führungsende der nächsten Zwei-Blatt-Einheit in die überstehende Stellung gebracht wird.

An der Seite der Kassette 14, an welcher das Führungsende einer Zwei-Blatt-Einheit übersteht, schliesst sich an die Aufnahme 13 eine Entwicklungsstation 18 mit einem ein Entwicklerbad 19 aufnehmenden, geschlossenen Behälter 20 an. An einer Seite des Behälters 20 ist oben ein Eingabeschlitz 21 mit einem dahinter angeordneten Transportwalzenpaar 22 vorgesehen, in das durch nicht weiter dargestellte Führungselemente das Führungsende der obersten Zwei-Blatt-Einheit 15a mit der Eingabe der Kassette 14 eingeschoben werden kann. Von dem Transportrollenpaar 22 führt ein Leitblech 23 zu einem oberhalb des Entwicklerbades 19 angeordneten Transportrollenpaar 24, auf dessen anderen Seite ein Trennelement 25 für die Zwei-Blatt-Einheit angeordnet ist. Durch weitere Führungselemente 26 werden in an sich bekannter Weise Führungskanäle für die getrennten Blätter in der Behandlungsflüssigkeit gebildet sowie ein Zusammenführen dieser Blätter hinter dem Trennelement 25 bewirkt. Die Führungselemente 26 reichen bis zu einem dritten Transportwalzenpaar 27, das am Ausgang der Entwicklungsstation 18 auf derselben Seite wie das Transportwalzenpaar 22 angeordnet ist. Ein Ausgangsspalt 28 führt in einen Diffusionsraum 29, der unterhalb der Aufnahme 13 angeordnet ist. Der Diffusionsraum 29 ist durch eine Klappe 30 lichtdicht verschlossen.

Im übrigen ist oberhalb der Aufnahme 13 ein Tubus 31 vorgesehen, der an seiner Oberseite die Belichtungseinrichtung 1 trägt und den Raum zwischen Belichtungseinrichtung 1 und Aufnahme 13 lichtdicht verschliesst. In dem Tubus 31 ist eine Klappe 32 vorgesehen, die in geöffnetem Zustand der Bedienungsperson zum Zwecke des Scharfeinstellens einen Blick auf die Positivebene freigibt.

Die Wirkungsweise der beschriebenen Vorrichtung ist nun folgendermassen:

Durch die Klappe 16 wird die Kassette 14 in die Aufnahme 13 eingeschoben und durch die Elemente 17 positioniert. Durch eine entsprechende Kassetten-Konfektionierung befindet sich an deren Oberfläche ein weisses Blatt, auf das mit dem Blick durch die Öffnung in dem Tubus 31 die Scharfeinstellung vorgenommen werden kann. Nach dem Scharfeinstellen wird die Lichtquelle 2 abgeschaltet bzw. durch einen Verschluss verdeckt und die Klappe 32 geschlossen. Sodann wird der gemeinsame Transport der Walzenpaare 22, 24, 27 betätigt, wodurch das zwischen das Walzenpaar 22 eingeführte Führungsende abgezogen wird. Damit wird zunächst das weisse Deckblatt aus der Positivebene bewegt, bis das lichtempfindliche Material freigelegt ist. Hierauf wird der Transport gestoppt und die Belichtung kann erfolgen. Nach der Belichtung wird der Transport wieder fortgesetzt, womit die oberste, belichtete Zwei-Blatt-Einheit 15a durch die Walzenpaare 22 und 24 transportiert und von dem Trennelement 25 schliesslich voneinander abgehoben wird. Die getrennten Blätter werden aufgrund des andauernden Transportes durch die von den Elementen 25 und 26 gebildeten Kanäle in der Flüssigkeit 19 geführt und in dem Transportwalzenpaar 27 zusammengeführt, welche schliesslich die wiedervereinigte Zwei-Blatt-Einheit zusammengepresst in den Diffusionsraum 29 ausgibt. Nach einer bestimmten Verweilzeit in diesem Diffusionsraum kann nach vollständiger Entwicklung die Einheit entnommen und das Negativblatt vom Positiv getrennt werden.

Im Rahmen der Erfindung sind nun zahlreiche Abwandlungen möglich. Beispielsweise kann die äussere Form der Kassette so ausgebildet sein, dass die Aufnahme 13 durch Fortfallen der Klappe 16 vereinfacht ausgeführt sein kann. Durch die Form der Kassette werden mit ihrem Einschieben die lichtdichten Abschlüsse gegenüber dem Tubus 31 und der Entwicklungsstation 18 automatisch hergestellt.

Damit das Führungsende der jeweils obersten Zwei-Blatt-Einheit auch sicher in das Transportwalzenpaar 22 gelangt, können an der Kassette Vorschubelemente vorgesehen werden, welche dieses Führungsende in das Transportwalzenpaar 22 am Eingang der Entwicklungsstation 18 fördern.

Statt das weisse Deckblatt zum Scharfeinstellen in den Gesamtverband aufzunehmen, wäre es ebenso möglich, jeweils einzelne Deckblätter vorzusehen, die an der Eingabeseite der Aufnahme 13 nach dem Einstellen durch ein lichtdichtes Kassettenmaul von Hand herausziehbar sind.

Selbstverständlich kann anstelle einer Aufnahme für eine Kassette auch eine Aufnahme für eine einzelne Zwei-Blatt-Einheit vorgesehen werden, welche durch geeignete Mittel in der Aufnahme gehalten ist und in ähnlicher Weise Führungsende und Einstell-Deckblatt aufweist.

## Patentansprüche

1. Vorrichtung zum Belichten und Entwickeln von lichtempfindlichem Material, mit einer eine Lichtquelle, Farbfilter, eine Vorlagenbühne und eine einstellbare Abbildungsoptik aufweisenden Belichtungseinrichtung, einer die Positivebene definierenden Aufnahme für das lichtempfindliche Material und einer Entwicklungsstation, in welche das lichtempfindliche Material von der Aufnahme überführbar ist, dadurch gekennzeichnet, dass die Belichtung auf ein nach dem Diffusionsverfahren zu behandelndes Material (15a) erfolgt, welches nach der Belichtung von der Positivebene unter Umkehr seiner Bewegungsrichtung durch die Entwicklungsstation (18) in einen unterhalb der Aufnahme (13) angeordneten, lichtdicht verschliessbaren Diffusionsraum (29) bringbar ist.

2. Vorrichtung nach Anspruch 1, dadurch gekennzeichnet, dass zwischen der Aufnahme (13) für das lichtempfindliche Material (15a) und der Belichtungseinrichtung (1) ein lichtdicht abgeschlossenes Gehäuse (31) vorgesehen ist, welches eine durch eine Klappe (32) verschliessbare Öffnung für einen Einblick auf die Positivebene aufweist.

3. Vorrichtung nach Anspruch 1 oder 2, dadurch gekennzeichnet, dass zum Transport des lichtempfindlichen Materials (15a) in der Entwicklungsstation (18) Transportwalzenpaare (22, 24, 27) vorgesehen sind, welche antriebsmässig miteinander gekoppelt sind.

4. Vorrichtung nach einem der Ansprüche 1 bis 3, dadurch gkennzeichnet, dass das lichtempfindliche Material (15a) an einer Seite eines Gehäuses (20) der Entwicklungsstation (18) eingeführt und oberhalb des Flüssigkeitsspiegels (19) in der Entwicklungsstation wieder herausgeführt ist und dass für die Umlenkung bzw. Trennung des als Zwei-Blatt-Einheiten vorliegenden lichtempfindlichen Materials Führungs- (23, 26) bzw. Trennelemente (25) vorgesehen sind.

## Revendications

1. Installation d'exposition et de développement d'une surface photosensible, comprenant un dispositif d'exposition présentant une source lumineuse, un filtre coloré, un porte-original et une optique réglable de reproduction, un logement, définissant le plan positif, de réception de la surface photosensible et un poste de développement dans lequel la surface photosensible venant du logement peut passer, caractérisée en ce que l'exposition s'effectue sur une surface (15a) à traiter par le procédé de diffusion qui, après l'exposition, peut être ramenée, avec inversion de son sens de déplacement et en passant par le poste (18) de développement, du plan positif à une chambre (29) de diffusion pouvant être fermée de manière étanche à la lumière et disposée en dessous du logement (13).

2. Installation suivant la revendication 1, caractérisée en ce qu'entre le logement (13) de réception de la surface (15a) photosensible et le dispositif (1) d'exposition est interposé un boîtier (31) fermé d'une manière étanche à la lumière qui présente une ouverture pouvant être fermée par un volet (32) et permettant de voir le plan positif.

3. Installation suivant la revendication 1 ou 2, caractérisée en ce que pour faire avancer la surface (15a) photosensible au poste (18) de développement, il est prévu des couples (22, 24, 27) de rouleaux d'avancement qui sont accouplés entre eux du point de vue de l'entraînement.

4. Installation suivant l'une des revendications 1 à 3, caractérisée en ce que la surface (15a) photosensible est introduite sur un côté d'un boîtier (20) du poste (18) de développement et est ressortie du poste de développement au-dessus du niveau (19) du liquide et, pour la déviation et la séparation de la surface photosensible se présentant sous la forme d'unités à feuille double, il est prévu des éléments de guidage (23, 26) et de séparation (25).

**Claims**

1. Apparatus for exposing and developing photosensitive material, comprising an exposure station provided with a light source, colour filter, an original supporting stage and an adjustable focussing optic, a receptacle for the photosensitive material defining the positive plane and a developing station into which the photoesensitive material is transferable from the receptacle, characterised in that the exposure is applied to a material (15a) which is suitable for diffusion processing and which after exposure is transportable from the positive plane through the developing station (18) in which its direction of travel is reversed, into a ligh-proof closed diffusion chamber (29) arranged beneath the receptacle (13).

2. Apparatus according to claim 1, characterised in that between the receptacle (13) for the photosensitive material (15a) and the exposure station (1) there is provided a light-proof sealed housing (31) which comprises an aperture adapted to be closed by a flap (32) and affording visual access to the positive plane.

3. Apparatus according to claim 1 or 2, characterised in that for transport of the photosensitive material (15a) in the developing station (18) pairs of transport rolls (22, 24, 27) are provided, which are drivingly coupled with one another.

4. Apparatus according to any one of claims 1 to 3, characterised in that the photosensitive material (15a) is introduced on one side of a housing (20) of the developing station (18) and is led out and back above the liquid level (19) in the developing station, and in that guiding – (23, 26) and separating elements (25) are provided for the turning round and separation of the photosensitive material (15a) presented as two-sheet-units.